# EUROPÄISCHE PATENTSCHRIFT

(11) **EP 3 839 413 B1**
(45) Veröffentlichungstag und Bekanntmachung des Hinweises auf die Patenterteilung: **16.03.2022**
(21) Anmeldenummer: 19217780.6
(22) Anmeldetag: 19.12.2019
(51) Int. Cl.: F42B 3/107, F42B 3/198

(54) **METALL-FIXIERMATERIAL-DURCHFÜHRUNG, VERFAHREN ZU IHRER HERSTELLUNG UND IHRE VERWENDUNGEN**
METAL FIXING MATERIAL FEEDTHROUGH, METHOD FOR THE PRODUCTION AND USES THEREOF
RÉALISATION D'UN MATÉRIAU DE FIXATION DE MÉTAL, SON PROCÉDÉ DE FABRICATION ET SES UTILISATIONS

(43) Veröffentlichungstag der Anmeldung: 23.06.2021
(60) Teilanmeldung: 22154931.4
(73) Patentinhaber: SCHOTT AG, 55122 Mainz (DE)
(72) Erfinder: RANFTL, Reinhard, 84076 Pfeffenhausen (DE); PFEIFFER, Thomas, 84036 Kumhausen (DE); NISHIWAKI, Susumu, Koka-shi, Shiga 528-0042 (JP); ROUSEK, Ondrej, 56401 Zamberk (CZ)
(74) Vertreter: Sawodny, Michael-Wolfgang

(56) Entgegenhaltungen:
- EP-A1- 1 225 415
- EP-A1- 1 813 906
- WO-A1-00/73729
- DE-U1- 20 314 580
- JP-A- H06 185 897
- JP-A- 2010 084 981
- US-A- 5 243 492

## Beschreibung

Die Erfindung betrifft Metall-Fixiermaterial-Durchführung für Durchführungselemente im Allgemeinen, beispielsweise für Durchführungen für Sensoren und/oder Großdurchführungen und/oder Durchführungen in Transistor-Outline-Gehäusen und/oder Batterie- oder Kondensatordurchführungen, sowie solche Durchführungen selbst. Insbesondere vorgesehen sind Durchführungen für Zündvorrichtungen, wie sie zum Zünden einer pyrotechnischen Personenschutzvorrichtung verwendet werden, insbesondere aber solche, die für Airbagzünder und/oder Gurtstraffer und/oder Gasgeneratoren einsetzbar sind. Insbesondere betrifft die Erfindung die Ausgestaltung des Sockels solcher Durchführungselemente, das Verfahren zu dessen Herstellung und dessen Anwendungen.

Durchführungen von Sensoren können insbesondere Sensorelemente mit Strom versorgen und/oder deren Signale an Auswerteeinheiten weiterleiten. Großdurchführungen werden im Allgemeinen in Sicherheitsbehältern eingesetzt, zum Beispiel in Flüssiggastanks und/oder Reaktoren.

Als Batterie- oder Kondensatordurchführungen werden in der Regel Durchführungen durch die Gehäuse von Batterien einschließlich Akkumulatoren oder von Kondensatoren verstanden. Der Begriff umfasst ebenfalls das Gebiet der Superkondensatoren, auch Supercaps genannt. Die Durchführung dient üblicherweise dazu, Elektroden im Innern des Batterie- oder Kondensatorgehäuses zu kontaktieren.

Ein Transistor-Outline-Gehäuse, auch TO-Gehäuse genannt, ist ein stromführendes Elektronikgehäuse. Ein TO-Gehäuse besteht grundsätzlich aus zwei Bauteilen, einem Sockel und einer Kappe. Während die Sockel vor allem die Stromversorgung der gekapselten Bauteile sicherstellt, dient die Kappe im Bereich der Opto-Elektronik der sicheren Übertragung optischer Signale. Dies umfasst sowohl die Sender (z.B. Laserdioden), als auch die Empfänger von optischen Signalen (z.B. Fotodioden). Der TO-Sockel stellt die mechanische Basis für die Montage von elektronischen und optischen Bauteilen dar, wie z.B. Halbleiter, Laserdioden oder auch einem einfachen elektrischen Schaltkreis. Gleichzeitig versorgt er die geschützten Komponenten mit Hilfe von Anschlussstiften mit Strom.

Als pyrotechnische Personenschutzvorrichtungen kommen in Kraftfahrzeugen insbesondere Airbags und/oder Gurtstraffer zum Einsatz. Derartige Sicherheitssysteme können das Verletzungsrisiko erheblich senken. Voraussetzung ist jedoch, dass im Falle eines Zusammenstoßes die jeweiligen Sicherheitssysteme nicht versagen. Besonderes Augenmerk wird dabei insbesondere auch auf die Zünder solcher pyrotechnischen Einrichtungen gerichtet, welche für die Funktion einer solchen Sicherheitseinrichtung unerlässlich sind. Insbesondere müssen die Zünder auch viele Jahre nach ihrer Herstellung noch einwandfrei funktionieren. Als mittlere Lebensdauer solcher Zünder wird oftmals 15 Jahre angegeben. Um eine dauerhaft einwandfreie Funktion zu gewährleisten, muss dabei sichergestellt sein, dass sich die im Zünder vorhandene Treibladung im Laufe der Zeit nicht verändert. Derartige Veränderungen können beispielsweise durch in den Zünder eindringende Feuchtigkeit verursacht werden. Es ist daher wichtig, die Treibladung des Zünders hermetisch zu verkapseln. Auch muss der Zünder die Gase der gezündeten Treibladung in die richtige Richtung freisetzen, um die Treibladung eines Gasgenerators des Sicherheitssystems zu zünden.

Um dies zu gewährleisten, weisen aus dem Stand der Technik bekannte Zünder eine Kappe oder einen Deckel und einen vergleichsweise massiven Sockel auf, zwischen denen die Treibladung in einem aus diesen Teilen gebildeten Hohlraum eingeschlossen ist. Durch den Sockel wird mittels elektrischer Anschlüsse der Strom zum Zünden der Treibladung geleitet. Daher weist der Sockel in der Regel Durchgangsöffnungen auf, in denen sich Metallstifte befinden, die auf der einen Seite mittels einer Steckverbindung mit elektrischem Strom versorgt werden können und auf der anderen Seite beispielsweise mittels einer Zündbrücke verbunden sind, die beim Stromdurchfluss in Kontakt mit dem Treibmittel die Zündung desselben bewirkt.

Der Sockel wird daher auch allgemein Durchführungselement genannt. Bei der Auslegung des Durchführungselements muss sichergestellt werden, dass bei der Zündung der Treibladung auf jeden Fall die Kappe oder der Deckel oder ein Teil davon abreißt und nicht die elektrischen Durchführungen aus dem Sockel getrieben werden.

Bei solchen Durchführungselementen besteht der Grundkörper des Sockels aus Metall und die Zündbrücke wird mittels eines angeschweißten Brückendrahtes realisiert. Bei dieser Ausführungsform ist ein Metallstift als Pin in einem elektrisch isolierenden Fixiermaterial in einer Durchgangsöffnung des Grundkörpers fixiert. Als Fixiermaterial wird üblicherweise ein Glasmaterial, insbesondere ein Glaslot verwendet. Dadurch ist dieser Metallstift zum Außenleiter durch Glas isoliert. Ebenso möglich sind Keramik-, Glaskeramik- und/oder Polymer als Isolationsmaterial.

Ein zweiter Metallstift als Pin ist mit dem Außenleiter, der durch den Grundkörper oder auch Bodenplatte genannt, repräsentiert wird, verschweißt oder verlötet. Auf der Oberseite des Durchführungselements - das ist die Seite, die der Zündkappe der endmontierten Zündvorrichtung zugewandt ist - kommt somit ein Brückendraht (meist aus einer Wolframlegierung) als Zündbrücke in Kontakt mit der Oberfläche des Glasmaterials. Damit der Brückendraht nicht beschädigt wird und das Zündelement im Gebrauch beispielsweise in einem Kraftfahrzeug eine lange Lebensdauer aufweist, muss die Oberfläche des Glasmaterials üblicherweise geschliffen werden, da Rauigkeiten der Oberfläche den Brückendraht beschädigen können.

Zündvorrichtungen der vorgenannten Art sind beispielsweise aus der EP 1813906 B1 bekannt.

Die EP 0586133 A2 beschreibt die Herstellung von Metall-Fixiermaterial-Durchführungen für Airbagzünder, bei welcher der Kontaktpin in ein Glasmaterial in der Durchgangsöffnung eingeglast ist und die Oberfläche des Grundkörpers und des Fixiermaterials vor dem Anbringen des Brückendrahts geschliffen wird.

TO-Gehäuse sind beispielsweise in der US 8,908,728 B1 dargestellt. Hier ist es denkbar, einen Massestift mit dem Grundkörper zu verbinden, um den Grundkörper elektrisch zu erden.

Aus der JP H 06185897 ist eine Metall-Fixiermaterial-Durchführung für Anzünder von Airbags und/oder Gurtstraffern bekannt geworden, bei dem die Oberfläche des glasigen oder glaskeramischen Fixiermaterials frei von Hohlräumen, Luftblasen und Sprüngen, die größer als der Durchmesser des Bridgewires sind, ist. Die JP H 06185897 ist nächstliegender Stand der Technik.

Die EP1813906 A1 beschreibt eine Metall-Fixiermaterial-Durchführung für Anzünder von Airbags oder Gurtspannern, insbesondere Metall-Glas-Durchführung, mit wenigstens einem Metallstift, der in einer Durchgangsöffnung im Grundkörper in einem Fixiermaterial angeordnet ist, wobei der Grundkörper eine Vorder- und Rückseite aufweist und zwischen Vorderseite und Rückseite des Grundkörpers Mittel zur Vermeidung einer Relativbewegung von Fixiermaterial in Richtung der Rückseite gegenüber dem Innenumfang der Durchgangsöffnung vorgesehen sind. Des Weiteren ist die Durchgangsöffnung aus dem Grundkörper ausgestanzt.

Die DE 20314580 U1 zeigt eine Metall-Fixiermaterial-Durchführung für Anzünder von Airbags oder Gurtspannern, insbesondere Metall-Glas-Durchführung, mit wenigstens einem Metallstift, der in einer Durchgangsöffnung im Grundkörper in einem Fixiermaterial angeordnet ist, wobei der Grundkörper eine Vorder- und eine Rückseite aufweist, gekennzeichnet durch die folgenden Merkmale:
- der Grundkörper wird von einem Element gebildet, wobei die die Durchgangsöffnung beschreibende Grundgeometrie wenigstens durch einen Trennvorgang erzeugt wird;
- zwischen Vorderseite und Rückseite des Grundkörpers sind Mittel zur Vermeidung einer Relativbewegung von Fixiermaterial in Richtung der Rückseite gegenüber dem Innenumfang der Durchgangsöffnung vorgesehen.

Die JP 2010 084981 A zeigt eine Glas-Metall-Durchführung, wobei das Glasmaterial, das in eine Öffnung eingelassen ist, sich durch eine glatte Oberfläche auszeichnet.

Aus der WO 00/73729 A1 ist eine Durchführung für Anzünder bekannt geworden, bei der ein Keramikmaterial eine Öffnung verschließt.

Die EP 1225415 A1 beschreibt eine Durchführung, bei der der Leiter durch ein Harzmaterial geführt werden kann und die Leiter mit einem Brückendraht verbunden sind.

Die US 5,243,492 B zeigt eine Durchführung, bei der ein Leiter durch ein Glasmaterial hindurchgeführt wird und der Leiter mit dem Grundkörper, in den das Glasmaterial eingelassen ist, über einen Brückendraht elektrisch leitend verbunden ist.

Vor diesem Hintergrund ist es die Aufgabe der vorliegenden Erfindung, eine Metall-Fixiermaterial-Durchführung für ein Durchführungselement, insbesondere für Anzünder von Airbags und/oder Gurtstraffern, zur Verfügung zu stellen, bei dem die Nachteile des Standes der Technik vermieden werden und ein Schleifen der Oberfläche vermieden wird, sowie ein Verfahren zur Herstellung.

Die Aufgabe wird gelöst durch die Metall-Fixiermaterial-Durchführung und das Verfahren zu deren Herstellung gemäß den unabhängigen Ansprüchen.

Bevorzugte Ausführungsformen und Anwendungen ergeben sich aus den davon abhängigen Ansprüchen.

Die erfindungsgemäße Metall-Fixiermaterial-Durchführung umfasst einen insbesondere metallischen Grundkörper sowie zumindest eine Durchgangsöffnung, in welcher zumindest ein Metallstift in einem elektrisch isolierenden glasigen oder glaskeramischen Fixiermaterial eingeschmolzen und auf diese Weise in diesem fixiert ist. Die Oberfläche des glasigen oder glaskeramischen Fixiermaterials ist eine freigeschmolzene Oberfläche, die besonders vorteilhaft frei von offenliegenden Blasen ist. Freigeschmolzen im Sinne der Erfindung heißt, dass sich die Oberfläche beim Erkalten des aufgeschmolzenen Glasmaterials von selbst ausbildet. Sie ähnelt visuell feuerpolierten Oberflächen und ist als Solches mit bloßem Auge erkennbar, insbesondere da sie einen spiegelnden Glanz aufweisen kann.

Die Oberfläche des freigeschmolzenen Fixiermaterials liegt auf einer Ebene mit der Stirnfläche des zumindest einen Metallstifts, der in dem Fixiermaterial eingeschmolzen ist. Damit ist selbstverständlich diejenige Stirnfläche des Metallstifts gemeint, welche dem Fixiermaterial am nächsten liegt und welche zum Verbinden mit dem Leiter oder Zündleiter vorgesehen ist, mithin der Oberseite der Metall-Fixiermaterial-Durchführung.

Bei der Herstellung der Metall-Fixiermaterial-Durchführung wird üblicherweise von einem Pressling ausgegangen, der zusammen mit dem Metallstift in der Durchgangsöffnung angeordnet und dann erhitzt wird, so dass der Pressling aufschmilzt und sich mit dem Grundkörper und dem Metallstift verbindet. Der Pressling wir üblicherweise hergestellt, indem das Glas- oder glaskeramische Material zermahlen, mit meistens organischen Bindern versetzt und in Form gepresst wird. Es ist ebenso möglich, dass der Pressling ebenfalls gesintert wird, bevor das Einschmelzen des Metallstifts erfolgt. Ebenso ist es möglich, dass das glaskeramische Material während des Erhitzens und/oder Abkühlens aus dem zuvor amorphen glasigen Material entsteht.

Beim Einschmelzen des Metallstifts und dem Verbinden mit dem Grundkörper brennt der Binder aus. Das glasige oder glaskeramische Fixiermaterial in der Durchgangsöffnung ist üblicherweise mit Blasen versetzt und weist Überstände über die Oberfläche des Grundkörpers auf. Ebenso wird der Metallstift üblicherweise so angeordnet, dass er über die Oberfläche des Grundkörpers hervorsteht. Um eine plane Oberfläche zu erzielen, die auf einer Ebene liegt, wird daher davon ausgegangen, dass die Oberfläche plan geschliffen werden muss.

Im Gegensatz dazu wird entsprechend der vorliegenden Erfindung die Oberfläche des Fixiermaterials während des Aufschmelzvorgangs freigeschmolzen. Dabei wird insbesondere der zumindest eine Metallstift auch so in der Durchgangsöffnung angeordnet, dass seine Stirnfläche in einer Ebene mit der Oberfläche des Grundkörpers liegt. Die Erfinder haben festgestellt, dass durch das freischmelzen eine glatte Oberfläche des glasigen oder glaskeramischen Fixiermaterials resultiert und das Schleifen unnötig ist.

Die Erfindung sieht ebenso vor, dass zwischen dem Grundkörper und dem zumindest einen Metallstift ein elektrischer Leiter, insbesondere Zündleiter angebracht ist, der den Grundkörper und den zumindest einen Metallstift elektrisch leitfähig verbindet. Die die Oberfläche des Fixiermaterials ist zumindest im Bereich des Leiters frei von offenliegenden Blasen.

Besonders vorteilhaft ist die gesamte Oberfläche des Fixiermaterials frei von offenliegenden Blasen. Allerdings ist es auch technisch ausreichend und von der Erfindung, wenn die gesamte Oberfläche des Fixiermaterials im Wesentlichen frei von aufgeschmolzenen Blasen ist, wobei darunter eine Anzahl von höchstens 5 offenen Blasen auf der Oberfläche verstanden wird. Diese können auf der Oberfläche verteilt sein, wie beschrieben nicht jedoch in dem Bereich, auf dem der Zünddraht vorhanden ist, d.h. insbesondere auf dem Fixiermaterial aufliegt.

Gängigerweise wird für den Grundkörper Normalstahl wie St 35 und/oder St 37 und/oder St 38 oder Edelstahl und/oder nichtrostender Stahl als Material für in Grundkörper eingesetzt. Edelstahl nach DIN EN 10020 ist eine Bezeichnung für legierte oder unlegierte Stähle, deren Schwefel- und Phosphorgehalt (sog. Eisenbegleiter) 0,035 % nicht übersteigt. Häufig sind danach weitere Wärmebehandlungen (z. B. Vergüten) vorgesehen. Zu den Edelstählen zählen zum Beispiel hochreine Stähle, bei denen durch einen besonderen Herstellungsprozess Bestandteile wie Aluminium und Silizium aus der Schmelze ausgeschieden werden, ferner auch hochlegierte Werkzeugstähle, die für eine spätere Wärmebehandlung vorgesehen sind. Solche enthalten insbesondere Chrom. Verwendbar sind beispielsweise: X12CrMoS17, X5CrNi1810, XCrNiS189, X2CrNi1911, X12CrNi177, X5CrNiMo17-12-2, X6CrNiMoTi17-12-2, X6CrNiTi1810 und X15CrNiSi25-20, X10CrNi1808, X2CrNiMo17-12-2, X6CrNiMoTi17-12-2.

Um eine maximale Herstellungseffizienz der erfindungsgemäßen Durchführung zu gewährleisten, kann der metallische Grundkörper vorteilhaft aber auch aus keinem Edelstahl bestehen. Vorteilhaft wird der Grundkörper stattdessen aus einem Stahl aus der Gruppe 1.01xx bis 1.07xx (unlegierte Qualitätsstähle) gebildet. Die Angabe der Stahlgruppe erfolgt dabei nach DIN EN 10 027-2, wobei die erste Ziffer die Werkstoff-Hauptgruppe und die Ziffernfolge nach dem ersten Punkt die Stahlgruppen-Nummer angibt.

Um eine möglichst gute Korrosionsbeständigkeit zu gewährleisten, kann der Grundkörper mit Metallen beschichtet sein. Bevorzugt wird eine Nickelbeschichtung verwendet. Dies trifft insbesondere für Grundkörper zu, die aus unlegierten Qualitätsstählen gebildet werden.

Das glasige oder glaskeramische Fixiermaterial wird vorteilhaft so gewählt, dass dessen thermische Ausdehnung niedriger ist als diejenige des metallischen Grundkörpers. Beim Aufschmelzen und anschließendem Abkühlen schrumpft der Grundkörper sozusagen auf das erstarrte Fixiermaterial, so dass eine sogenannte Druckdurchführung, auch Druckeinglasung genannt, erhalten wird. Dies bedeutet, dass der Grundkörper einen axialen Druck auf das Fixiermaterial ausübt, was dessen mechanische Haltekraft in der Durchgangsöffnung erhöht.

Auf diese Weise wird eine hermetisch dichte Metall-Fixiermaterial-Durchführung erreicht.

Die Erfinder haben festgestellt, dass beim vorbeschriebenen Vorgehen, insbesondere beim Freischmelzen der Oberfläche, das glasige oder glaskeramischen Fixiermaterial zwar in seinem Volumen Blasen mit einem Blasenanteil BV aufweisen kann, an seiner Oberfläche aber eine Glashaut, welche einen Blasenanteil aufweist, der erheblich kleiner als BV ist. Besonders bevorzugt ist die Glashaut im Wesentlichen blasenfrei, was heißt dass höchstens 5 Blasen vorliegen, oder sogar vollständig blasenfrei. Insbesondere ist die Glashaut und/oder die Oberfläche des Fixiermaterials in dem Bereich, auf dem der Zünddraht aufliegt, blasenfrei.

Dadurch, dass das Fixiermaterial eine freigeschmolzene Oberfläche hat, ist ihre Rauigkeit geringer als bei den bisher geschliffenen Metall-Fixiermaterial-Durchführungen. Insbesondere beträgt der Mittenrauwert Ra der Oberfläche des glasigen oder glaskeramischen Fixiermaterials weniger als 0,1 µm insbesondere im Bereich von 0,02 µm bis 0,05 µm liegt. Im Gegensatz dazu betragen übliche Ra Werte bei den bisherigen geschliffenen Metall-Fixiermaterial-Durchführungen zwischen 0,2 µm und 0,5 µm. Die höheren Rauhigkeitswerte des bisheriges geschliffenen Fixiermaterials resultieren i.d.R. aus den verbliebenen Schleifspuren, insbesondere in Form von Riefen.

Der Mittenrauwert Ra ist gemäß DIN EN ISO 4287:2010 definiert und wird wie dem Fachmann bekannt bestimmt. Die mittlere Rauheit oder auch Mittenrauwert Ra gibt den mittleren Abstand eines Messpunktes innerhalb eines vertikalen Schnitts, d.h. des Profils der Mikrostrukturierung zur Mittellinie an. Die Mittellinie schneidet innerhalb der Bezugsstrecke das wirkliche Profil so, dass die Summe der Profilabweichungen (bezogen auf die Mittellinie) minimal wird. Die mittlere Rauheit Ra entspricht also dem arithmetischen Mittel der betragsmäßigen Abweichung von der Mittellinie.

Die glattere Oberfläche der erfindungsgemäßen Metall-Fixiermaterial-Durchführung hat gegenüber dem Stand der Technik weiterhin den Vorteil, dass die Gefahr von Beschädigungen des Brückendrahtes verringert wird, wenn dieser auf dem Fixiermaterial aufliegt. In Airbagzündern oder Gurtstraffern ist der Brückendraht in Berührung mit dem Zündmaterial, das häufig in Pulverform vorliegen kann. Auch wenn die Korngröße des Pulvers üblicherweise größer als die Riefen der Schleifspuren sind, kann im Laufe der Produktlebenszeit Pulverabrieb und damit sehr feines Korn entstehen, welches sich in die Riefen unter den Brückendraht klemmen und so mechanischen Stress auf diesen ausüben kann. Durch die erfindungsgemäße Metall-Fixiermaterial-Durchführung wird dies vermieden.

In einer weiteren bevorzugten Ausführungsform ist der Grundkörper so ausgebildet, dass ein kontinuierlicher Übergang von der Oberfläche des Grundkörpers zur inneren Wandung der Durchgangsöffnung vorhanden ist, insbesondere mit zunehmendem Gefälle in Richtung zur inneren Wandung der Durchgangsöffnung. Kontinuierlicher Übergang bedeutet, dass wenn der Schnitt durch diesen Bereich als Kurve aufgefasst wird, die erste Ableitung dieser Kurve einen stetigen Verlauf hat. Im Unterschied dazu haben die Grundkörper aus dem Stand der Technik einen scharfen Knick, so dass die erste Ableitung deren Schnitts unstetig ist. Diese Ausführung hat den Vorteil, dass der Grundkörper einfach über Umformungs- und/oder Stanzverfahren hergestellt werden kann, insbesondere die Durchgangsöffnung, ohne in weitere Nachverarbeitungsschritte zum Erzielen senkrechter Winkel einsetzen zu müssen. Ein weiterer Vorteil dieser Grundkörpergestaltung ist, dass das Volumen des Presslings, das für den Füllstand des Fixiermaterials in der Durchgangsöffnung verantwortlich ist, unkritischer bzgl. Volumenschwankungen ist. Das bedeutet, bei gegebener Volumenschwankung ändert sich der Füllstand in der Durchgangsöffnung weniger als der Durchmesser des Fixiermaterials, was für das Anbringen des Brückendrahts weniger kritisch ist als eine eventuelle Stufe, wie sie bei nicht ausreichender Füllung resultieren würde.

Der kontinuierliche Übergang hat weiterhin den Effekt, dass sich eine dünne Fixiermaterialschicht auf dem flach zur Durchgangsöffnung hin abfallenden Bereich befindet. Überraschend hat sich gezeigt, dass obwohl es sich um eine Druckeinglasung handelt, keine Abplatzungen des Fixiermaterials zu beobachten sind.

Erfindungsgemäß ist vorgesehen, dass sich zwischen der inneren Wandung der Durchgangsöffnung und dem glasigen oder glaskeramischen Fixiermaterial im Bereich von dessen Oberfläche ein Graben befindet. Ein Graben repräsentiert im Allgemeinen eine Vertiefung in der Oberfläche des Fixiermaterials. Die Breite B des Grabens beträgt bevorzugt höchstens 0,13 mm, besonders bevorzugt von 0,005 mm bis 0,13 mm oder 0,01 bis 0,13 mm. Insbesondere bevorzugt beträgt die Tiefe T dieses Grabens höchstens 0,03 mm, insbesondere höchstens 0,015 mm, insbesondere bevorzugt beträgt die Tiefe T zwischen 0,05 mm und 0,025 mm.

Die Bildung des Grabens kann durch die vorgenannte Ausgestaltung des Übergangs der Oberfläche des Grundkörpers zur inneren Wandung der Durchgangsöffnung begünstigt sein, d.h. diese Ausgestaltung und das Vorhandensein des Grabens wirken besonders vorteilhaft zusammen.

Das Vorhandensein des Grabens hat den Vorteil, dass dadurch, insbesondere im Betrieb der Metall-Fixiermaterial-Durchführung, ein Stopp für Filmbelegung der Oberfläche des Fixiermaterials und/oder der Oberfläche des Grundkörpers erreicht werden kann. Solche Filme können insbesondere wasserhaltige Filme und/oder Belegungen sein, die im Langzeitbetrieb auftreten können und im schlechtesten Fall zu reduzierten Übergangswiderständen, Kurzschlüssen und/oder elektrochemischer Korrosion und damit zu Beschädigungen des Bauteils umfassend die Metall-Fixiermaterial-Durchführung führen können.

Der Graben kann insbesondere vorteilhaft beim Aufschmelzen des Fixiermaterials und dessen anschließenden Abkühlen von selbst ausgebildet werden. Es wird vermutet, dass dies aus der Anhaftung- und Benetzungseigenschaften des glasigen oder glaskeramischen Fixiermaterials folgt. Ebenso ist es möglich, den Graben einzuprägen, solange das erwärmte Fixiermaterial noch formbar ist.

Vorteilhaft ist die Ausführungsform, in der das glasige oder glaskeramische Fixiermaterial ohne Grabenbildung auf der Oberfläche des zumindest einen Metallstifts an- und/oder aufliegt. Dies bedeutet, der vorgenannte Graben befindet sich nur an dem Übergangsbereich von Fixiermaterial zu Grundkörper und nicht an dem Übergangsbereich von Fixiermaterial zu Metallstift. Dies kann insbesondere dadurch erreicht werden, wenn der Radius der ggfls. vorhandenen Abrundung am Metallstift, d.h. beim Überhang von dessen Stirn- zur Mantelfläche, kleiner ist als der Radius des Übergangs des Grundkörpers von dessen Oberfläche zur inneren Wandung der Durchgangsöffnung.

Wie bereits beschrieben kann der Graben dabei vorteilhaft als Stopp für störende, die Oberfläche belegende Filme dienen, welche einen Einfluss auf das elektrische Verhalten des elektrischen Leiters haben können, insbesondere das Zündverhalten. Andererseits ist der Graben vorteilhaft so dimensioniert, dass sich keine störenden großen Partikel zwischen sie und den elektrischen Leiter klemmen und so den Leiter mechanisch über Gebühr belasten könnten.

Insbesondere wird der Metallstift so angeordnet, dass die Oberseite, d.h. die ebene Stirnfläche des Metallstifts, in einer Ebene mit der Oberfläche des glasigen oder glaskeramischen Fixiermaterials liegt. Vorteilhaft ist der Metallstift verrundet, d.h. insbesondere ist der Übergang zwischen der Oberseite des Metallstifts und dessen Seitenwand abgerundet, wobei der Übergangspunt zwischen dieser Abrundung und der Seitenwand unterhalb der Oberfläche des glasigen oder glaskeramischen Fixiermaterials liegt.

Insbesondere ist der Graben umlaufend, v.a. kreisrund. Bevorzugt ist die Durchgangsöffnung in der Aufsicht kreisrund ausgebildet ist und der Graben folgt kreisrund der inneren Wandung der Durchgangsöffnung, ggfls. mit einem Abstand.

Besonders bevorzugt ist eine Metall-Fixiermaterial-Durchführung, bei der zwischen dem Grundkörper und dem zumindest einen Metallstift ein elektrischer Leiter, insbesondere ein drahtförmiger Leiter, insbesondere ein Zündleiter angebracht ist, der den Grundkörper und den dem zumindest einen Metallstift elektrisch leitfähig verbindet. Der Leiter liegt zumindest bereichsweise auf der Oberfläche des glasigen oder glaskeramischen Fixiermaterials auf und überbrückt bevorzugt den Graben. In diesem Bereich, in dem der Graben überbrückt wird, befindet sich unter dem Leiter ein Freiraum. Ebenso ist es möglich, diesen Freiraum aufzufüllen und/oder zu beschichten, z.B. mit einem Kunststoff, insbes. einem hydrophoben Kunststoff oder einem solchen mit einer hydrophoben Oberfläche. Wie beschrieben kann der Graben als Abrisskante für insbesondere elektrisch leitende Belegungen oder korrosive Filme dienen. Die umlaufende Kante schirmt das Fixiermaterial und/oder den zumindest einen Metallstift sozusagen von diesen Belegungen und/oder Filmen ab.

In einer weiteren bevorzugten Ausführungsform besteht der Grundkörper zumindest an der Grenzfläche zu dem glasigen oder glaskeramischen Fixiermaterial aus einem Stahl, insbesondere rostfreien Edelstahl. Ebenso bevorzugt besteht der zumindest eine Metallstift zumindest an der Grenzfläche zu dem glasigen oder glaskeramischen Fixiermaterial aus einem Stahl, insbesondere rostfreien Edelstahl. Besonders vorteilhaft weist der Stahl und/oder Edelstahl eine Benetzung und/oder Anhaftung gegenüber Glas auf, welche die Ausbildung des Grabens zumindest unterstützt.

Vorteilhaft und von der Erfindung umfasst ist es, wenn die Oberseite des Metallstifts in einer Ebene mit der Oberfläche des glasigen oder glaskeramischen Fixiermaterials liegt. Insbesondere kann der Übergang zwischen der Oberseite des Metallstifts und dessen Seitenwand abgerundet sein, wobei der Übergangspunkt zwischen dieser Abrundung und der Seitenwand unterhalb der Oberfläche des glasigen oder glaskeramischen Fixiermaterials liegt. Die Abrundung wird also sozusagen in das Fixiermaterial hineingezogen. Gegenüber einem scharfen Übergang, bei dem die Seitenwand des Metallstifts direkt senkrecht auf dessen Oberfläche trifft, hat dies den Vorteil, dass die Wahrscheinlichkeit zur Rissbildung an der Grenzfläche zwischen Metallstift und Fixiermaterial reduziert ist.

Wie beschrieben liegt die Oberseite des Metallstifts, d.h. dessen Stirnfläche, in einer Ebene mit der Oberfläche des glasigen oder glaskeramischen Fixiermaterials liegt. Insbesondere kann der Übergang zwischen der Oberseite des Metallstifts und dessen Seitenwand abgerundet sein, wobei der Übergangspunt zwischen dieser Abrundung und der Seitenwand unterhalb der Oberfläche des glasigen oder glaskeramischen Fixiermaterials liegt. Die Abrundung wird also sozusagen in das Fixiermaterial hineingezogen. Gegenüber einem scharfen Übergang, bei dem die Seitenwand des Metallstifts direkt senkrecht auf dessen Oberfläche trifft, hat dies den Vorteil, dass die Wahrscheinlichkeit zur Rissbildung an der Grenzfläche zwischen Metallstift und Fixiermaterial reduziert ist.

Ebenso vorgesehen ist, dass zwischen dem Grundkörper und dem zumindest einen Metallstift ein elektrischer Leiter, insbesondere Zündleiter angebracht ist, der den Grundkörper und den zumindest einen Metallstift elektrisch leitfähig verbindet. Üblicherweise wird dieser angeschweißt. Dieser Leiter liegt zumindest bereichsweise auf der Oberfläche des glasigen oder glaskeramischen Fixiermaterial auf. Insbesondere überbrückt er den beschriebenen Graben.

Die Erfindung umfasst ebenso das Verfahren zur Herstellung einer Metall-Fixiermaterial-Durchführung insbesondere für Anzünder von Airbags und/oder Gurtstraffern, mit zumindest einem Metallstift, der in eine Durchgangsöffnung eines Grundköpers in einem glasigen oder glaskeramischen Fixiermaterial durch Erwärmen und anschließendem Abkühlen eingeschmolzen ist, welches eine Oberfläche zwischen dem zumindest einen Metallstift und dem Grundkörper aufweist, wobei beim Einschmelzen des zumindest einen Metallstifts in das glasige oder glaskeramische Fixiermaterial das erwärmte Fixiermaterial an dieser Oberfläche freigeschmolzen wird.

Bei diesem Vorgang glast das Fixiermaterial an der inneren Wandung der Durchgangsöffnung und der äußeren Wand des zumindest einen Metallstifts an,
Alle zuvor bzgl. der Metall-Fixiermaterial-Durchführung beschriebenen Merkmale sind auch auf das Verfahren übertragbar.

Das beanspruchte Verfahren umfasst einen Teil der gesamten Herstellungsschritte einer Durchführung und/oder eines Airbagzünders oder Gurtstraffers.

Bevorzugt bildet sich beim Freischmelzen eine im Wesentlichen blasenfreie Oberfläche des Fixiermaterials insbesondere von selbst aus. Im Wesentlichen blasenfrei bedeutet höchstens 5 Blasen an der Oberfläche, wovon natürlich auch eine vollständige Blasenfreiheit umfasst ist. Bevorzugt beträgt der Mittenrauwert Ra der Oberfläche des glasigen oder glaskeramischen Fixiermaterials weniger als 0,1 µm, insbesondere liegt Ra im Bereich von 0,015 µm bis 0,055 µm, besonders vorteilhaft von 0,02 µm bis 0,05 µm. In einer bevorzugten Ausführungsform liegt das glasige oder glaskeramische Fixiermaterial ohne Grabenbildung an der Oberfläche des zumindest einen Metallstifts an. Dies bedeutet, dass es besonders vorteilhaft ist, dass der Graben zwischen Grundkörper und Fixiermaterial vorhanden ist, nicht aber zwischen Fixiermaterial und Metallstift.

Die Durchgangsöffnung selbst ist bevorzugt in der Aufsicht kreisrund ausgebildet und der Graben folgt besonders bevorzugt kreisrund der inneren Wandung der Durchgangsöffnung. Eine kreisrunde Durchgangsöffnung kann insbesondere durch Stanzen und/oder Umformen erhalten werden. Bohren und andere geeignete Verfahren sind allerdings ebenso möglich.

Wie bereits beschrieben ist es ein besonders vorteilhaftes Verfahren, den Grundkörper und/oder die Durchgangsöffnung durch Umformen und/oder Stanzen zu erzeugen. Insbesondere materialeffizient kann der Grundkörper durch Umformen hergestellt werden, wobei die zumindest eine Durchgangsöffnung ausgestanzt wird.

Besonders vorteilhaft ist es, wenn der Grundkörper so geformt ist oder wird, dass ein kontinuierlicher Übergang von der Oberfläche des Grundkörpers zur inneren Wandung der Durchgangsöffnung vorhanden ist, insbesondere mit zunehmendem Gefälle in Richtung zur inneren Wandung der Durchgangsöffnung. Dies entspricht sozusagen einer Abrundung mit progressiver Steigung. Diese Form kann insbesondere beim Stanzvorgang der Durchgangsöffnung erzeugt werden.

In einem erfindungsgemäßen Verfahren bildet sich zwischen der inneren Wandung der Durchgangsöffnung und dem glasigen oder glaskeramischen Fixiermaterial im Bereich dessen Oberfläche beim Erwärmen und/oder Abkühlen einen Graben (55) selbständig aus. Alternativ wird diese eingeprägt, beispielsweise mit einem Stempel- oder Prägewerkzeug. Insbesondere weist der Graben eine Breite B auf, die bevorzugt höchstens 0,13 mm beträgt. Besonders bevorzugt beträgt die Tiefe T des Grabens höchstens 0,03 mm, insbesondere höchstens 0,015 mm, insbesondere bevorzugt beträgt die Tiefe T zwischen 0,05 mm und 0,025 mm.

Ebenso möglich ist es, den Graben mit geeigneten Werkzeugen, beispielsweise Stempeln, einzuprägen oder materialabtragend zu erzeugen.

In der Weiterverarbeitung kann ein elektrischer Leiter wie beschrieben zwischen Metallstift und der Oberfläche des Grundkörpers angebracht werden, insbesondere angeschweißt werden.

Ebenso üblich ist es oftmals, dass zumindest ein weiterer Leiter, insbesondere Metallstift, elektrisch leitend mit dem Grundkörper verbunden wird. Dies ist üblicherweise ein Erdungs- oder Masseleiter. Bei der beschriebenen elektrisch leitenden Verbindung eines Metallstifts mit dem Grundkörper handelt es sich üblicherweise um eine Lotverbindung. Ebenso möglich es es, diesen Leiter an den Grundkörper zu schweißen.

Bevorzugte Anwendungen der erfindungsgemäßen Metall-Fixiermaterial-Durchführung und/oder des erfindungsgemäßen Verfahrensergebnisses ist in Airbagzündern und/oder Gurtstraffern und/oder Gasgeneratoren.

Bei Airbagzündern und/oder Gurtstraffern und/oder Gasgeneratoren ist das der in der Durchgangsöffnung fixierte Metallstift, ebenso wie der mit dem Grundkörper verlötete Massestift, üblicherweise zumindest in Teilbereichen entlang ihrer Achse mit Gold beschichtet. Die Goldbeschichtung bewirkt eine dauerhafte Unempfindlichkeit gegenüber Korrosion und einen dauerhaften Kontakt. Häufig sind die Metallstifte an ihren Endbereichen mit Gold beschichtet. Auf diese Weise ist bevorzugt der Bereich des Metallstifts vergoldet, der sich bei der Montage zum Gebrauch der Zündvorrichtung innerhalb der Steckverbindung befindet. Auf diese Weise können die Übergangswiderstände im Steckkontakt reduziert werden.

In einer vorteilhaften Ausführungsform sind zumindest zwei Metallstifte auf der dem Treibmittel zugewandten Seite des Grundkörpers mittels einer Zündbrücke elektrisch leitend miteinander verbunden. Die Zündbrücke kann durch den bereits beschriebenen Zünddraht gebildet werden.

Wie voranstehend beschrieben kann Rauheit der Fixiermaterialoberfläche, bzw. im Sinne der Erfindung eher Glattheit, durch die mittlere Rauheit Ra charakterisiert werden. Ebenso kann die gemittelte Rautiefe Rz wie dem Fachmann bekannt angegeben werden.

In Versuchen, die ebenfalls Ausführungsbeispiele repräsentieren, wurde mittels dem beschriebenen Verfahren die beschriebene Metall-Fixiermaterial-Durchführung hergestellt und die Rauigkeit der Fixiermaterialoberfläche bestimmt, welche erfindungsgemäß freigeschmolzen ist. Als Vergleich sind in Tabelle 1 ebenso die Messwerte für entsprechend dem Stand der Technik geschliffene Fixiermaterialoberflächen angegeben. Als Messmethode fand die dem Fachmann bekannte taktile Messung mittels Hommel Taster Anwendung.

**Tabelle 1: Rauhigkeitsmessungen an freigeschmolzener Fixiermaterialoberfläche**

| | ***Erfindungsgemäß: Freigeschmolzene Fixiermaterialoberfläche*** | | | ***Stand der Technik: Geschliffene Fixiermaterialoberfläche*** | | |
|---|---|---|---|---|---|---|
| **Messung Nr.** | **Ra [µm]** | **Rmax [µm]** | **Rz [µm]** | **Ra [µm]** | **Rmax [µm]** | **Rz [µm]** |
| 1 | 0,032 | 0,301 | 0,249 | 1,206 | 15,524 | 9,217 |
| 2 | 0,030 | 0,293 | 0,235 | 0,905 | 14,364 | 9,974 |
| 3 | 0,024 | 0,275 | 0,192 | 0,679 | 11,667 | 7,082 |
| 4 | 0,023 | 0,662 | 0,261 | 0,954 | 11,466 | 9,286 |
| 5 | 0,024 | 0,178 | 0,166 | 1,174 | 14,079 | 8,915 |
| 6 | 0,023 | 0,200 | 0,168 | | | |
| **Mittelwert:** | **0,026** | | **0,212** | **0,984** | | **8,895** |

Die Erfindung wird im Folgenden anhand der Figuren näher erläutert. Die Zeichnungen sind nicht maßstabsgetreu, die dargestellten Ausführungsformen sind schematisch. Die Figuren stellen auch exemplarisch Ausführungsbeispiele dar. Alle in den Figuren dargestellten Bezugszeichen gelten auch für die jeweils anderen Figuren.

Figur 1 zeigt eine bekannte Zündvorrichtung beinhaltend eine Metall-Fixiermaterial-Durchführung gemäß dem Stand der Technik, mit einer geschliffenen Oberfläche, auf welcher der Zünddraht aufliegt.

Figur 2 zeigt einen Schnitt durch eine erfindungsgemäße Metall-Fixiermaterial-Durchführung parallel zu deren axialen Mittenachse.

Figur 3 zeigt einen Ausschnitt aus Figur 2.

Figur 4 zeigt die Fotografie der Draufsicht auf eine erfindungsgemäße Metall-Fixiermaterial-Durchführung und die Messkurve der Vermessung des Grabens.

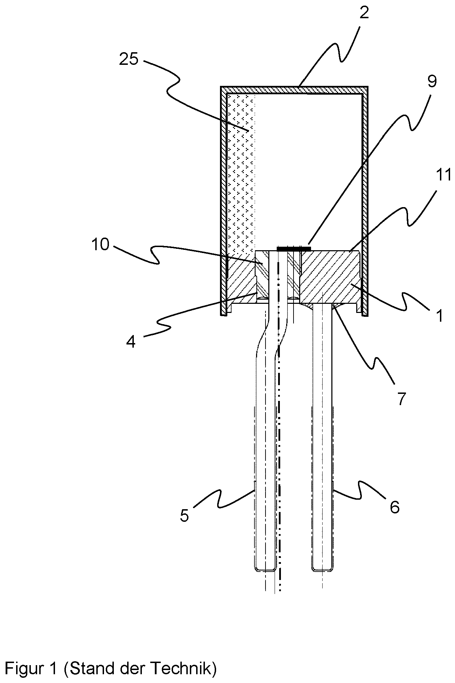

In Figur 1 ist eine aus dem Stand der Technik bekannte Zündvorrichtung für eine pyrotechnische Schutzvorrichtung dargestellt, hier als Beispiel ein Airbagzünder. Dabei zeigt Figur 1 insbesondere eine Schnittansicht einer Metall-Fixiermaterial-Durchführung. Die Metall-Fixiermaterial-Durchführung umfasst ein Metall-Trägerteil mit einem Grundkörper (1), welcher hier eine scheibenförmige Grundform aufweist. Grundformen mit Freistellungsbereich sind ebenso bekannt und von der Erfindung umfasst. Die erfindungsgemäße Metall-Fixiermaterial-Durchführung wird häufig auch als Sockelelement oder kurz Sockel oder englisch Header bezeichnet. In einer Durchgangsöffnung (4) des Grundkörpers (1) ist außerdem ein Metallstift (5) als Funktionselement angeordnet. Die Durchgangsöffnung (4) wurde dabei aus dem Grundkörper (1) ausgestanzt. Der Metallstift (5) dient zur Kontaktierung einer Zündbrücke (9) mit elektrischem Strom, über die die im fertigen Zünder eingeschlossene Treibladung (25) gezündet wird. Die Zündbrücke liegt auf der Oberseite (11) des Grundkörpers auf. Als Oberseite wird die der Treibladung zugewandte Seite bezeichnet. Die Zündvorrichtung wird durch die Kappe (2) verschlossen, welche zusammen mit dem Grundkörper (1) einen Hohlraum zur Aufnahme der Treibladung (25) bildet. Üblicherweise ist die Kappe (2) mit dem Grundkörper verschweißt.

Die Stromdurchführung in der Durchgansöffnung (4) ist im Stand der Technik insbesondere als Glas-Metall-Durchführung ausgeführt, wobei Glas als Fixiermaterial (10) zwischen Metallstift (5) und der Wandung der Durchgangsöffnung (4) im metallischen Grundkörper (3) dient. Ebenso möglich ist es, Hochleistungspolymere oder andere geeignete Materialien in der Durchgangsöffnung einzusetzen, ebenso Glaskeramikmaterialien.

Die Durchgangsöffnung (4) ist bei dem in den Figur 1 gezeigten Beispiel exzentrisch bezüglich der axialen Mittenachse des Grundkörpers (1) angeordnet. Damit wird erreicht, dass auch bei kleinem Radius des Grundkörpers (3) hinreichend viel Platz zur Befestigung eines zweiten Metallstifts (6) zur Verfügung steht. Der zweite Metallstift (6) ist am Grundkörper (1) mittels einer Lötverbindung stumpf verlötet und dient somit als Massestift, auch Massepin (6) genannt. Als Lotmaterial (7) werden insbesondere metallische Lotmaterialien verwendet, insbesondere Hartlot. Das Lotmaterial (7) bildet einen Meniskus zwischen der Oberfläche des Grundkörpers und dem Massepin (6) aus.

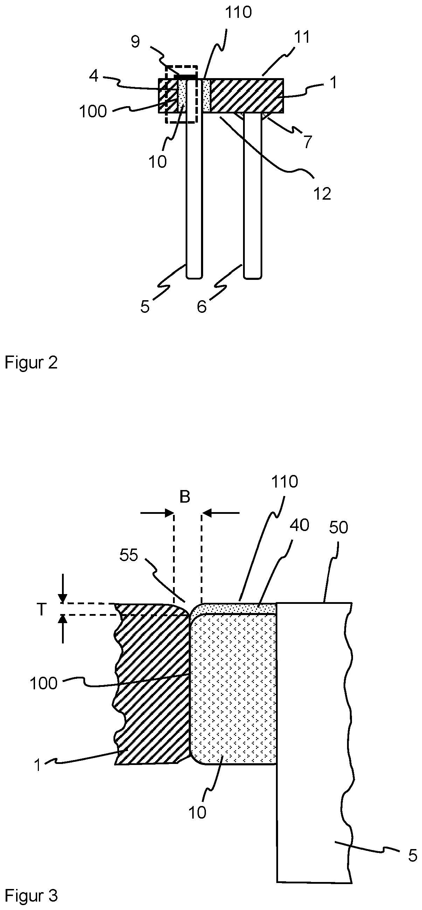

Figur 2 zeigt dahingegen den Schnitt durch eine erfindungsgemäße Metall-Fixiermaterial-Durchführung parallel zu deren axialer Mittenachse und durch diese hindurch. Der Grundkörper (1) weist eine erste Oberfläche (11) auf, hier die Oberseite, und eine in vielen Ausführungsformen parallel dazu verlaufende zweite Oberfläche (12), hier die Unterseite. Die Oberseite (11) ist üblicherweise dem Treibmittel (25) zugewandt, an der Unterseite (12) werden üblicherweise die elektrischen Kontaktierungen vorgenommen. Der metallische Grundkörper (1) weist eine Durchgangsöffnung (4) auf, durch welche der Metallstift (5) als Pin geführt ist. Die Durchgangsöffnung (4) kann aus dem Grundkörper (1) ausgestanzt sein. Die äußere Kontur des Grundkörpers (1) wurde in diesem Beispiel ebenfalls aus einem Blechstreifen ausgestanzt, so dass der gesamte Grundkörper (1) hier ein Stanzteil repräsentiert. Ebenso möglich und von der Erfindung umfasst ist es aber auch, dass der Grundkörper durch Kaltumformen aus einem Drahtmaterial hergestellt ist. In der Durchgangsöffnung (4) ist der Metallstift (5) mittels eines glasigen oder glaskeramischen Fixiermaterials (10) elektrisch isoliert von dem Grundkörper (1) als erster Pin, auch Kontaktpin genannt, eingeschmolzen, d.h. fixiert.

Der erste Metallstift (5) ist insbesondere hermetisch dicht in der ersten Durchgangsöffnung (4) des metallischen Grundköpers (1) eingeglast. Das glasige oder glaskeramische Fixiermaterial (10) dieser Metall-Fixiermaterial-Durchführung ist vollständig vom Material des Grundkörpers (1) umgeben, welcher den Außenleiter repräsentiert.

Das glasige oder glaskeramische Fixiermaterial (10) weist insbesondere einen kleineren thermischen Ausdehnungskoeffizienten als das Metall des Grundkörpers (1) auf, so dass der Grundkörper (1) beim Erkalten nach dem Einglasen des Metallstifts (5) in das Fixiermaterial (10) sozusagen auf dieses und somit die Glas-Metall-Durchführung aufschrumpft und auf diese Weise dauerhaft einen mechanischen Druck auf diese und das Fixiermaterial (10) ausübt. Auf diese Weise wird eine besonders dichte und mechanisch stabile Verbindung zwischen Metallstift (5), Fixiermaterial (10) und Grundkörper (1) geschaffen. Diese Anordnung wird Druckeinglasung genannt und ist beispielsweise für Airbagzünder zu bevorzugen. Ebenso möglich und von der Erfindung umfasst ist der Einsatz von Glasmaterialien und/oder Glaskeramikmaterialien.

Die Oberfläche (110) des Fixiermaterials (10) auf der Oberseite (11) des Grundkörpers (1) ist eine freigeschmolzene Oberfläche und liegt in einer Ebene mit der Stirnfläche (50) des eingeschmolzenen Metallstifts (5) und vorteilhaft auch in einer Ebene mit der Oberseite (11) des Grundkörpers. Wie bereits beschrieben zeichnet sich die freigeschmolzene Oberfläche vorteilhaft durch eine Glashaut (40)aus, die verglichen mit dem Volumen des Fixiermaterials (10) einen reduzierten Blasenanteil aufweist, insbesondere keine offenen Blasen an ihrer Oberfläche (110), zumindest im Bereich des Zündleiters.

Der Zündleiter (9) liegt auf der Oberfläche (110) des Fixiermaterials auf und ist sowohl mit dem Metallstift (5) und dem Grundkörper (1) verschweißt, d.h. mit der Stirnfläche (50) des Metallstifts (5) und der Oberfläche (110) des Grundkörpers (1). Nicht dargestellt ist der Graben (55).

Der zweite Metallstift (6) ist als Massepin mittels Lotmaterial (7) mit dem Grundkörper (1) verbunden.

Figur 3 zeigt einen Ausschnitt aus Figur 2, der in Figur 2 als durchbrochenes Rechteck dargestellt ist. Dies entspricht einer Vergrößerung im Bereich Grundkörper (1), Fixiermaterial (10) und die Stirnfläche (50) des Metallstifts (5). Der Einfachheit halber ist der Zünddraht (9) nicht dargestellt.

Allerdings ersichtlich in Figur 3 ist der Graben (55), welcher sich zwischen Grundkörper (1) und Fixiermaterial (10) befindet. Der Graben hat die Breite B und die Tiefe T. Der Graben (55) kann insbesondere als meniskusförmige Anformung des Fixiermaterials (10) an den Grundkörper (1) ausgebildet sein. Die Breite B des Grabens beträgt höchstens 0,13 mm, insbesondere von insbesondere von 0,005 mm bis 0,13 mm oder von 0,01 bis 0,13 mm, und eine Tiefe T von höchstens 0,03 mm, insbesondere höchstens 0,015 mm, insbesondere beträgt die Tiefe T zwischen 0,025 mm 0,05 mm.

Insbesondere kann der Radius des Übergangs der Oberfläche (11) des Grundkörpers zu inneren Wandung (100) der Durchgangsöffnung größer sein als der Radius des Übergangs der äußeren Wandung des eingeschmolzenen Metallstifts (5) und dessen Stirnfläche (50). Dieser Radius ist der Einfachheit halber nicht in Figur 3 dargestellt. Dieses Verhältnis trägt aber insbesondere dazu bei, dass der Graben (55) am Übergang zum Grundkörper (1) vorliegt, nicht aber am Übergang zum Metallstift (5).

Ebenso dargestellt in Figur 3 ist die Glashaut (40), welche einen deutlich geringeren Blasenanteil aufweist als das Volumen des Fixiermaterials (10). In Figur 3 befindet sich eine Glashaut (40) auf der Oberseite (11) der Metall-Fixiermaterial-Durchführung. Es ist ebenso möglich und von der Erfindung umfasst, dass ebenso eine Glashaut auch auf der Unterseite (12) vorhanden ist. Dies ist insbesondere der Fall, wenn auch das Fixiermaterial (10) auf der Unterseite (12) freigeschmolzen wird.

Die Glashaut ist mit optischen Methoden sichtbar, insbesondere mit einem Mikroskop, obwohl ihre Dicke im Atomlagenbereich liegen kann.

Die innere Wandung (100) der Durchgangsöffnung (4) steht in direktem Kontakt mit dem Fixiermaterial (10), das Fixiermaterial (10) ist an der inneren Wandung (100) angeglast. Es ist ebenso möglich, dass zwischen der inneren Wandung (100) der Durchgangsöffnung und dem Fixiermaterial (10) eine Glashaut mit reduziertem Blasenanteil vorhanden ist. Gleiches gilt für die Grenzfläche zwischen Fixiermaterial (10) und äußerer Wandung des Metallstifts (5).

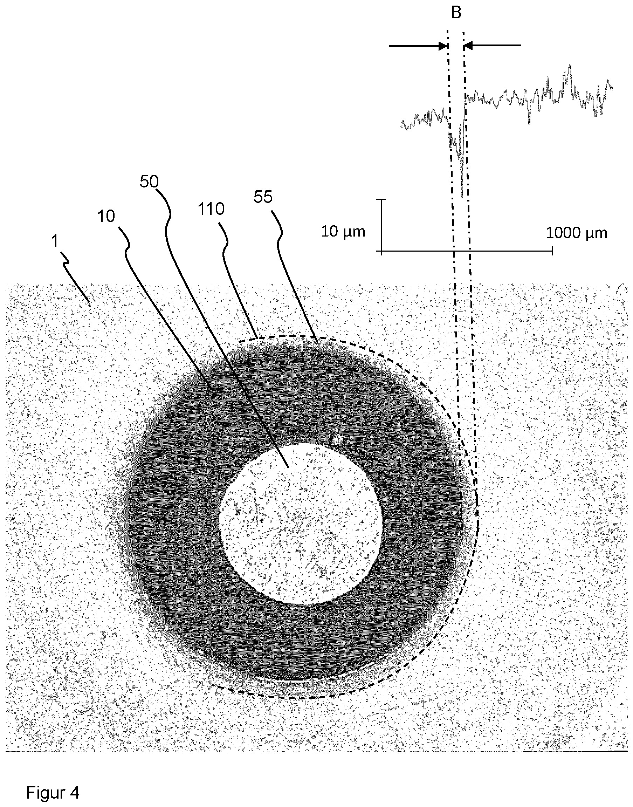

Figur 4 zeigt die Fotografie der Draufsicht auf eine erfindungsgemäße Metall-Fixiermaterial-Durchführung und die Messkurve der Vermessung des Grabens. Die Durchgangsöffnung ist kreisrund ausgebildet und mit dem Fixiermaterial (10) gefüllt. Darin eingeglast ist der Metallstift (5), sichtbar ist seine Stirnfläche (50). Die innere Wandung (110) der Durchgangsöffnung ist noch einmal durch die durchbrochene Linie besonders hervorgehoben. Es handelt sich wie beschrieben um eine ungeschliffene Oberfläche, die Fixiermaterialoberfläche ist freigeschmolzen. Es sind keine offenliegenden Blasen erkennbar. Die Glashaut ist sozusagen glatt oder dicht.

Ebenso dargestellt ist die Vermessung des Grabens (55) bzgl. ihrer Tiefe T und Breite B. Die Vermessung erfolgte mit einem digitalen Messmikroskop .

Bisher wurden die Metall-Fixiermaterial-Durchführungen insbesondere in der industriellen Massenproduktion für Airbagzünder und/oder Gurtstraffer auf ihrer Oberseite geschliffen, wobei sowohl die Metall- als auch die Fixiermaterialoberfläche angeschliffen werden. Danach folgt üblicherweise ein Reinigungsschritt.

Demgegenüber haben die erfindungsgemäßen Metall-Fixiermaterial-Durchführungen den Vorteil, dass ihre Fixiermaterialoberfläche freigeschmolzen ist. Dies hat zur Folge, dass die Metalloberfläche ungeschliffen ist und Verarbeitungsschritte eingespart werden können. Weiterhin hat das glasige oder glaskeramische Fixiermaterial entsprechend der Erfindung die Eigenschaft, beim Freischmelzen eine zumindest weitestgehend blasenfreie Oberfläche zu bilden, so dass die Gefahr von offenliegenden Blasen deutlich reduziert ist. Offenliegende Blasen sind zu vermeiden, da sie beim Anbringen eines Zünddrahtes unerwünscht sind.

## Patentansprüche

1. Metall-Fixiermaterial-Durchführung für Anzünder von Airbags und/oder Gurtstraffern, mit zumindest einem Metallstift (5), der in eine Durchgangsöffnung (4) eines Grundköpers (1) in einem glasigen oder glaskeramischen Fixiermaterial (10) eingeschmolzen ist,
wobei die Oberfläche (110) des glasigen oder glaskeramischen Fixiermaterials (10) eine freigeschmolzene Oberfläche ist und auf einer Ebene mit der Stirnfläche (50) des zumindest einen Metallstifts (5) liegt **dadurch gekennzeichnet, dass**
sich zwischen der inneren Wandung der Durchgangsöffnung (4) und dem glasigen oder glaskeramischen Fixiermaterial (10) im Bereich der Oberfläche (110) ein Graben (55) befindet.

2. Metall-Fixiermaterial-Durchführung nach Anspruch 1,
**dadurch gekennzeichnet, dass**
dass der Graben (55) eine Breite B aufweist, die höchstens 0,13 mm oder von 0,005 mm bis 0,13 mm oder von 0,01 bis 0,13 mm beträgt, und/oder wobei der Graben (55) eine Tiefe T aufweist, die höchstens 0,03 mm oder höchstens 0,015 mm beträgt oder die Tiefe T zwischen 0,05 mm und 0,025 mm beträgt.

3. Metall-Fixiermaterial-Durchführung nach mindestens einem der vorhergehenden Ansprüche,
**dadurch gekennzeichnet, dass**
das glasige oder glaskeramisch Fixiermaterial (10) ohne Grabenbildung an der Oberfläche des zumindest einen Metallstifts (5) anliegt.

4. Metall-Fixiermaterial-Durchführung nach mindestens einem der Ansprüche 1 bis 3,
**dadurch gekennzeichnet, dass**
die Durchgangsöffnung (4) in der Aufsicht kreisrund ausgebildet ist und der Graben (55) kreisrund der inneren Wandung (100) der Durchgangsöffnung (4) folgt.

5. Metall-Fixiermaterial-Durchführung nach mindestens einem der Ansprüche 1 bis 4,
**dadurch gekennzeichnet, dass**
zwischen dem Grundkörper (1) und dem zumindest einen Metallstift (5) ein elektrischer Leiter (9) oder Zündleiter (9) angebracht ist, der den Grundkörper (1) und den zumindest einen Metallstift (5) elektrisch leitfähig verbindet, wobei der Leiter (9) oder Zündleiter (9) zumindest bereichsweise auf der Oberfläche (110) des glasigen oder glaskeramischen Fixiermaterials (10) aufliegt und den Graben (55) überbrückt.

6. Metall-Fixiermaterial-Durchführung nach mindestens einem der vorangegangenen Ansprüche,
**dadurch gekennzeichnet, dass**
zwischen dem Grundkörper (1) und dem zumindest einen Metallstift (5) ein elektrischer Leiter (9) oder Zündleiter (9) angebracht ist, der den Grundkörper (1) und den zumindest einen Metallstift (5) elektrisch leitfähig verbindet, und die Oberfläche (110) des glasigen oder glaskeramischen Fixiermaterials (10) im Bereich des Leiters (9) oder Zündleiters (9) frei von offenliegenden Blasen ist.

7. Metall-Fixiermaterial-Durchführung nach mindestens einem der vorhergehenden Ansprüche,
**dadurch gekennzeichnet, dass**
das glasige oder glaskeramischen Fixiermaterial (10) in seinem Volumen Blasen mit einem Blasenanteil BV aufweist und an seiner Oberfläche (110) eine Glashaut (40), welche einen Blasenanteil aufweist, der erheblich kleiner als BV ist oder die höchstens 5 Blasen aufweist oder die blasenfrei ist.

8. Metall-Fixiermaterial-Durchführung nach mindestens einem der vorhergehenden Ansprüche,
**dadurch gekennzeichnet, dass**
der Mittenrauwert Ra nach DIN EN ISO 4287 der Oberfläche (110) des glasigen oder glaskeramischen Fixiermaterials (10) weniger als 0,1 µm beträgt oder im Bereich von 0,015 µm bis 0,05 µm liegt.

9. Metall-Fixiermaterial-Durchführung nach mindestens einem der vorhergehenden Ansprüche,
**dadurch gekennzeichnet, dass**
ein kontinuierlicher Übergang von der Oberfläche (11) des Grundkörpers zur inneren Wandung (100) der Durchgangsöffnung (4) vorhanden ist, bevorzugt mit zunehmendem Gefälle in Richtung zur inneren Wandung (100) der Durchgangsöffnung (4).

10. Metall-Fixiermaterial-Durchführung nach mindestens einem der vorhergehenden Ansprüche,
**dadurch gekennzeichnet, dass**
der Grundkörper (1) zumindest an der Grenzfläche zu dem glasigen oder glaskeramischen Fixiermaterial (10) aus einem Stahl, insbesondere rostfreien Edelstahl besteht; bevorzugt besteht der zumindest eine Metallstift (5) zumindest an der Grenzfläche zu dem glasigen oder glaskeramischen Fixiermaterial (10) aus einem Stahl, insbesondere rostfreien Edelstahl; insbesondere weist der Stahl und/oder Edelstahl des Grundkörpers (1) eine Benetzung und/oder Anhaftung gegenüber Glas auf, welche die Ausbildung des Grabens (55) zumindest unterstützt.

11. Verfahren zur Herstellung einer Metall-Fixiermaterial-Durchführung insbesondere für Anzünder von Airbags und/oder Gurtstraffern, mit zumindest einem Metallstift (5), der in eine Durchgangsöffnung (4) eines Grundköpers (1) in einem glasigen oder glaskeramischen Fixiermaterial (10) eingeschmolzen ist, welches eine Oberfläche (110) zwischen dem zumindest einen Metallstift (5) und dem Grundkörper (1) aufweist, wobei
beim Einschmelzen des zumindest einen Metallstifts (5) in das glasige oder glaskeramische Fixiermaterial (10) das erwärmte Fixiermaterial an seiner Oberfläche (110) freigeschmolzen wird,
**dadurch gekennzeichnet, dass**
sich zwischen der inneren Wandung der Durchgangsöffnung (4) und dem glasigen oder glaskeramischen Fixiermaterial (10) im Bereich der Oberfläche (110) ein Graben (55) befindet.

12. Verwendung einer Metall-Fixiermaterial-Durchführung nach mindestens einem der Ansprüche 1 bis 10 in Airbagzündern und/oder Gurtstraffern oder zur Herstellung von Airbagzündern und/oder Gurtstraffern.

## Claims

1. Metal-fixing-material feedthrough for igniters of airbags and/or seat-belt tensioners, comprising at least one metal pin (5) fused into a feedthrough opening (4) of a base body (1) in a glassy or glass-ceramic fixing material (10), wherein the surface (110) of the glassy or glass-ceramic fixing material (10) is a surface exposed by melting and lies on a plane with the end face (50) of the at least one metal pin (5),
**characterized in that**
a trench (55) is located between the inner wall of the feedthrough opening (4) and the glassy or glass-ceramic fixing material (10) in the region of the surface (110).

2. Metal-fixing-material feedthrough according to claim 1,
**characterized in that**
the trench (55) has a width B which is at most 0.13 mm or from 0.005 mm to 0.13 mm or from 0.01 to 0.13 mm, and/or wherein the trench (55) has a depth T which is at most 0.03 mm or at most 0.015 mm or the depth T is between 0.05 mm and 0.025 mm.

3. Metal-fixing-material feedthrough according to at least one of the preceding claims,
**characterized in that**
the glassy or glass-ceramic fixing material (10) abuts the surface of the at least one metal pin (5) without forming a trench.

4. Metal-fixing-material feedthrough according to at least one of claims 1 to 3, **characterized in that**
the feedthrough opening (4) is of circular design in plan view and the trench (55) circularly follows the inner wall (100) of the feedthrough opening (4).

5. Metal-fixing-material feedthrough according to at least one of claims 1 to 4, **characterized in that**
an electrical conductor (9) or ignition conductor (9) is fitted between the base body (1) and the at least one metal pin (5), which conductor (9) or ignition conductor (9) electrically conductively connects the base body (1) and the at least one metal pin (5), wherein the conductor (9) or ignition conductor (9) rests at least in regions on the surface (110) of the glassy or glass-ceramic fixing material (10) and bridges the trench (55).

6. Metal-fixing-material feedthrough according to at least one of the preceding claims,
**characterized in that**
an electrical conductor (9) or ignition conductor (9) is fitted between the base body (1) and the at least one metal pin (5), which conductor (9) or ignition conductor (9) electrically conductively connects the base body (1) and the at least one metal pin (5), and the surface (110) of the glassy or glass-ceramic fixing material (10) is free of exposed bubbles in the region of the conductor (9) or ignition conductor (9).

7. Metal-fixing-material feedthrough according to at least one of the preceding claims,
**characterized in that**
the glassy or glass-ceramic fixing material (10) has in its volume bubbles with a bubble fraction BV and on its surface (110) a glass skin (40) which has a bubble fraction which is considerably smaller than BV or which has at most 5 bubbles or which is bubble-free.

8. Metal-fixing-material feedthrough according to at least one of the preceding claims,
**characterized in that**
the center roughness Ra according to DIN EN ISO 4287 of the surface (110) of the glassy or glass-ceramic fixing material (10) is less than 0.1 µm or lies in the range from 0.015 µm to 0.05 µm.

9. Metal-fixing-material feedthrough according to at least one of the preceding claims,
**characterized in that**
there is a continuous transition from the surface (11) of the base body to the inner wall (100) of the feedthrough opening (4), preferably with increasing slope in the direction towards the inner wall (100) of the feedthrough opening (4).

10. Metal-fixing-material feedthrough according to at least one of the preceding claims,
**characterized in that**
the base body (1), at least at the interface to the glassy or glass-ceramic fixing material (10), consists of a steel, in particular stainless steel; preferably the at least one metal pin (5) consists at least at the interface to the glassy or glass-ceramic fixing material (10) of a steel, in particular stainless steel; in particular the steel and/or stainless steel of the base body (1) has a wetting and/or adhesion towards glass which at least supports the formation of the trench (55).

11. Method for producing a metal-fixing-material feedthrough, in particular for igniters of airbags and/or seat-belt pretensioners, having at least one metal pin (5) which is fused into a feedthrough opening (4) of a base body (1) in a glassy or glass-ceramic fixing material (10) which has a surface (110) between the at least one metal pin (5) and the base body (1),
wherein,
when the at least one metal pin (5) is fused into the glassy or glass-ceramic fixing material (10), the heated fixing material is exposed by melting at its surface (110), **characterized in that**
a trench (55) is located between the inner wall of the feedthrough opening (4) and the glassy or glass-ceramic fixing material (10) in the region of the surface (110).

12. Use of a metal-fixing-material feedthrough according to at least one of claims 1 to 10 in airbag igniters and/or seat-belt tensioners or for the manufacture of airbag igniters and/or seat-belt tensioners.

## Revendications

1. Traversée en métal et matériau de fixation pour déclencheurs pyrotechniques d'airbags et/ou de tendeurs de ceinture, avec au moins une tige métallique (5) fondue dans un matériau de fixation en verre ou en vitrocéramique (10) dans une ouverture de passage (4) d'un corps (1), dans laquelle la surface (110) du matériau de fixation en verre ou en vitrocéramique (10) est une surface dégagée par le matériau en fusion et se trouve dans le même plan que la face d'extrémité (50) de l'au moins une tige métallique (5),
**caractérisée en ce qu'**il
existe une tranchée (55) entre la paroi intérieure de l'ouverture de passage (4) et le matériau de fixation en verre ou en vitrocéramique (10) au niveau de la surface (110).

2. Traversée en métal et matériau de fixation selon la revendication 1,
**caractérisée en ce que**
la tranchée (55) présente une largeur B de 0,13 mm au maximum ou de 0,005 mm à 0,13 mm ou de 0,01 à 0,13 mm, et/ou dans laquelle la tranchée (55) présente une profondeur T de 0,03 mm au maximum ou de 0,015 mm au maximum ou la profondeur T est comprise entre 0,05 mm et 0,025 mm.

3. Traversée en métal et matériau de fixation selon l'une au moins des revendications précédentes,
**caractérisée en ce que**
le matériau de fixation en verre ou en vitrocéramique (10) s'applique sur la surface de l'au moins une tige métallique (5) sans former de tranchée.

4. Traversée en métal et matériau de fixation selon l'une au moins des revendications 1 à 3,
**caractérisée en ce que**
l'ouverture de passage (4) est circulaire en vue de dessus et la tranchée (55) suit la paroi intérieure (100) de l'ouverture de passage (4) en formant un cercle.

5. Traversée en métal et matériau de fixation selon l'une au moins des r evendications 1 à 4,
**caractérisée en ce qu'**est
disposé entre le corps (1) et l'au moins une tige métallique (5) un conducteur électrique (9) ou un conducteur d'allumage (9) qui relie le corps (1) et l'au moins une tige métallique (5) de manière conductrice électrique, le conducteur (9) ou le conducteur d'allumage (9) reposant au moins par zones sur la surface (110) du matériau de fixation en verre ou en vitrocéramique (10) et franchissant la tranchée (55).

6. Traversée en métal et matériau de fixation selon l'une au moins des revendications précédentes,
**caractérisée en ce qu'**est
disposé entre le corps (1) et l'au moins une tige métallique (5) un conducteur électrique (9) ou un conducteur d'allumage (9) qui relie le corps (1) et l'au moins une tige métallique (5) de manière conductrice électrique, et la surface (110) du matériau de fixation en verre ou en vitrocéramique (10) ne présente pas de bulles ouvertes au niveau du conducteur (9) ou du conducteur d'allumage (9).

7. Traversée en métal et matériau de fixation selon l'une au moins des revendications précédentes,
**caractérisée en ce que**
le matériau de fixation en verre ou en vitrocéramique (10) contient des bulles dans son volume dans une proportion de bulles BV et présente à sa surface (110) une peau de verre (40) où la proportion de bulles est nettement inférieure à BV ou qui contient au maximum 5 bulles ou qui ne contient aucune bulle.

8. Traversée en métal et matériau de fixation selon l'une au moins des revendications précédentes,
**caractérisée en ce que**
la rugosité moyenne Ra selon DIN EN ISO 4287 de la surface (110) du matériau de fixation en verre ou en vitrocéramique (10) est inférieure à 0,1 µm ou comprise entre 0,015 µm et 0,05 µm.

9. Traversée en métal et matériau de fixation selon l'une au moins des revendications précédentes,
**caractérisée en ce qu'**il
existe une transition continue de la surface (11) du corps à la paroi intérieure (100) de l'ouverture de passage (4), suivant de préférence une pente de plus en plus prononcée vers la paroi intérieure (100) de l'ouverture de passage (4).

10. Traversée en métal et matériau de fixation selon l'une au moins des revendications précédentes,
**caractérisée en ce que**
le corps (1) se compose, au moins à l'interface avec le matériau de fixation en verre ou en vitrocéramique (10), d'un acier, en particulier d'acier fin inoxydable, l'au moins une tige métallique (5) se compose de préférence, au moins à l'interface avec le matériau de fixation en verre ou en vitrocéramique (10), d'un acier, en particulier d'acier fin inoxydable, l'acier et/ou l'acier fin du corps (1) présente un mouillage ou une adhérence par le verre qui favorise au moins la formation de la tranchée (55).

11. Procédé de fabrication d'une traversée en métal et matériau de fixation, en particulier pour déclencheurs pyrotechniques d'airbags et/ou de tendeurs de ceinture, avec au moins une tige métallique (5) fondue dans une ouverture de passage (4) d'un corps (1) dans un matériau de fixation en verre ou en vitrocéramique (10), qui présente une surface (110) entre l'au moins une tige métallique (5) et le matériau de fixation en verre ou en vitrocéramique (10), dans lequel, lors de la fusion de l'au moins une tige métallique (5) dans le matériau de fixation en verre ou en vitrocéramique (10), le matériau de fixation chauffé est dégagé par le matériau en fusion à sa surface, **caractérisé en ce qu'**il
existe une tranchée (55) entre la paroi intérieure de l'ouverture de passage (4) et le matériau de fixation en verre ou en vitrocéramique (10) au niveau de la surface (110).

12. Utilisation d'une traversée en métal et matériau de fixation selon l'une au moins des revendications 1 à 10 dans des déclencheurs pyrotechniques d'airbags et/ou des tendeurs de ceintures ou pour la fabrication de déclencheurs pyrotechniques d'airbags et/ou de tendeurs de ceintures.
